# EUROPÄISCHE PATENTSCHRIFT

(11) **EP 0 328 925 B1**
(45) Veröffentlichungstag und Bekanntmachung des Hinweises auf die Patenterteilung: **16.06.1993**
(21) Anmeldenummer: 89101589.3
(22) Anmeldetag: 31.01.1989
(51) Int. Cl.: C09J 7/02, G09F 3/10

(54) **Haftklebrige Flächengebilde**
Self-adhesive flat items
Objets plats auto-adhésifs

(30) Priorität: 19.02.1988 DE 3805223
(43) Veröffentlichungstag der Anmeldung: 23.08.1989
(73) Patentinhaber: Beiersdorf Aktiengesellschaft, 20245 Hamburg (DE)
(72) Erfinder: Jauchen, Peter, D-2000 Hamburg 61 (DE); Grodd, Gerhard, D-2000 Hamburg 67 (DE); Külper, Klaus, D-2103 Hamburg 95 (DE)

(56) Entgegenhaltungen:
- EP-A- 0 149 135
- EP-A- 0 276 557
- WO-A-85/04602

## Beschreibung

Die Erfindung betrifft haftklebrige Flächengebilde, die rückstandsfrei wieder ablösbar und erneut verklebbar sind und die kalottenförmige Haftstellen von 20 - 1000 µ Basis-Durchmesser aufweisen. Insbesondere betrifft die Erfindung derartig ausgestaltete Haftnotizzettel, aber auch reversible Etiketten, Klebebänder, Schutzfolien, Abdeckpapiere, erneut zu verklebende Wund- und Wirkstoff-Pflaster und dergleichen.

Solche Flächengebilde, insbesondere als Haftnotizzettel, sind bekannt und auch in verschiedenartiger Ausführungsform im Handel erhältlich.

So beschreibt die US-A 4,587,152 (vgl. auch EP-B 149.135) rückstandsfrei wieder ablösbare, haftklebrige Flächengebilde, insbesondere Haftnotizzettel, auf denen sich kalottenförmige Haftstellen von bis zu etwa 600 µ Basisdurchmesser befinden. Derartige Haftstellen lassen sich besonders vorteilhaft und mit einer ausgereiften Technik im Siebdruck herstellen (neben anderen vergleichbaren Techniken) wobei Kleber-Dispersionen mit hohen Feststoffgehalten eingesetzt werden. Das Produkt zeichnet sich durch außergewöhnlich gleichförmige Haftstellen aus, angenähert kalottenförmige Gebilde von innerhalb engster Toleranzen gleichen Abmessungen, sowohl hinsichtlich Basis-Durchmesser als auch Höhe, und damit mit wohldefinierten Wiederablöse-Eigenschaften und Klebkräften.

Ähnliche Flächengebilde beschreibe WO 85/04602, ebenfalls mit Siebdruck und dergleichen als Herstellungsverfahren und mit Ausrichtung auf besondere Parameter der verwendeten Kleber-Dispersionen.

Neben dem obigen Typ von haftklebrigen Flächengebilden beschreibt die US-A 3.691.140 und die DE-A 2.417.312 ähnliche Flächengebilde, die sich jedoch durch einen speziellen Kleber mit kontaktklebrigen Mikrokugeln auszeichnen, nicht jedoch durch kalottenförmige Haftstellen. Diese Mikrokugeln, eingebettet in einen Basis-Kleber, sind elastisch ausgebildet und machen so das Produkt zum Wiederablösen und Wiederverkleben geeignet. Auch von diesem Typ, wie von den vorgenannten, sind Produkte im Handel erhältlich.

EP 0 276 557 beschreibt eine Sprühtechnik, bei der durch die Geschwindigkeit einer unter einem Sprühkopf laufenden Bahn und entsprechende Einstellung an der Sprühdüse gesteuert, Haftklebemasse derart aufgebracht wird, daß eine quer zur Laufrichtung verlaufende Gaußsche Verteilung der Auftragsmenge erreicht wird.

Ferner werden in der US-A 2.510.120 zur Verbesserung der Wiederablösbarkeit haftklebriger Flächengebilde eine partielle flächige Beschichtung, z.B. Streifen oder andere flächige Muster beschrieben. Die DE-A 2.535.897 beschreibt einen partiellen Auftrag von Haftklebemassen auf Etikettenpapier, bei dem mittels einer Gravurwalze nur die Etikettenfläche vollflächig vor dem Ausstanzen beschichtet wird. Schließlich beschreibt die JP-A 56 95 972 selbstklebende Blätter, die alternierend Segmente aus Kleber und Segmente aus klebstoffabweisendem Release-Material aufweisen, wobei die Release-Segmente als Abstandshalter eine stärkere Verformung der eng daneben liegenden Kleber-Segmente beim Anpressen verhindern und zu diesem Zweck eine flache Oberfläche aufweisen.

Die bekannten Haftnotizzettel und dergleichen weisen neben vorteilhaften Eigenschaften auch beträchtliche Mängel auf.

Für den Handel geeignet sind übereinanderliegende Stapel solcher Haftnotizzettel, also Blöcke vieler solcher Zettel, die keines zusätzlichen Zusammenhalts bedürfen. Insbesondere ist keine Verleimung einer Stirnkante oder dergleichen nötig, wie dies bei nicht selbstklebenden Zettel-Blöcken üblich ist. Vielmehr halten die Haftnotizzettel aufgrund ihrer eigenen Klebeigenschaften einen solchen Block zusammen, wobei üblich nur ein Randbereich der einzelnen Zettel mit Kleber beschichtet ist, um ein leichtes Anfassen des einzelnen Zettels zu ermöglichen - ein Verkleben des ganzen Zettels über seine gesamte Oberfläche wäre unerwünscht.

Von einem solchen Block wird vom Benutzer ein einzelner Zettel abgezogen, wobei sich ein für die Praxis schwerwiegender Nachteil zeigt. Indem nämlich der Papier-Zettel nach oben vom Block abgezogen wird, meist sogar etwas schräg seitlich, tritt ein plötzlicher Widerstand an der Stelle auf, an der der Kleber auf dem darunter befindlichen Zettel haftet. Dieser plötzliche Kraft-Angriff bewirkt einen sogenannten Krell des Papier-Zettels, also ein gewölbtes Verformen, so daß der abgezogene Zettel nicht mehr plan/eben ist sondern in dem Kleberbereich rund aufgebogen ist. Bei jedem erneuten Wiederablösen verstärkt sich diese Verformung, die wegen der begrenzten Klebkräfte derartiger Haftnotizzettel ein dauerhaftes, planes Verkleben verhindert. Vielmehr heben sich die Ecken oder der ganze Randbereich eines so verformten, verklebten Haftnotizzettels nach einiger Zeit von der Unterlage ab, der Zettel löst sich von selbst.

Diesem Nachteil etwa entgegenzuwirken durch Kleber mit höheren Klebkräften sind Grenzen gesetzt, indem einerseits höhere Klebkräfte die Verformung beim Abziehen sogar noch verstärken und andererseits höhere Klebkräfte für kritische Substrate, etwa Zeitungspapier, ungeeignet sind, indem beim Wiederablösen das Substrat beschädigt wird, Papierfasern aus dem Zeitungspapier gerissen werden, womit zugleich der Haftnotizzettel wegen der anhaftenden Fremdkörper nicht mehr wiederverklebbar ist.

Nachteilig bei den bekannten Haftnotizzetteln ist auch, daß diese in gestanzter Form oftmals kaum brauchbar sind. So sind Zettelblöcke etwa in der Form eines Herzen oder Osterhasen mit langen, selbstklebenden Ohren in der Praxis nur unzureichend zu realisieren. Entweder verkleben die exponierten Stellen, etwa die Hasen-Ohren, so stark, daß sie nur unter Krellen/Verformen vom Block abgezogen werden können und zudem später vom Substrat kaum unbeschädigt bzw. nur verformt abgezogen werden können, oder sie kleben so schwach, daß schon der geringste Krell bzw. ein unebenes Substrat genügt, den Zettel sich abheben zu lassen.

Nachteilig generell bei den obigen bekannten haftklebrigen Flächengebilden ist es, daß beim Abziehen der Widerstand plötzlich einsetzt. Ein Abziehen vom Typ "sanft und weich" bzw. "smooth and soft" ist nicht gegeben, während dies gerade für kritische Substrate und kritische Träger der Flächengebilde erwünscht ist, insbesondere für schwach oder gar nicht behandelte Papiere, Vliese, Gewebe und dergleichen.

Aufgabe der Erfindung war es, hier Abhilfe zu schaffen, insbesondere haftklebrige Flächengebilde zu schaffen, die die Nachteile des Standes der Technik nicht oder zumindest nicht in dem Maße aufweisen, sich insbesondere für ein sanftes und weiches Abziehen eignen, ohne sich dabei zu verformen bzw. kritische Substrate zu beschädigen.

Erfindungsgemäß werden dazu die eingangs genannten Flächengebilde derart ausgerüstet, daß die Anzahl der Haftstellen pro cm² ansteigt von mindestens 10 auf höchstens 15000 und/oder daß der Klebmasse-Auftrag ansteigt von mindestens 1 g/m² auf höchstens 30 g/m².

Dabei steigt die Anzahl der Haftstellen und/oder der Klebmasse-Auftrag vorteilhaft in der Richtung an, in der das Wiederablösen des Flächengebildes vorgesehen ist, also bei einem nur in seinem Randbereich mit Kleber ausgerüsteten Haftnotizzettel in der Richtung auf diesen Randbereich. An der kleberfreien Seite wird der Haftnotizzettel in üblicher Weise angefaßt und vom Substrat abgezogen, wobei zunächst nur ein geringer Widerstand der Haftstellen zu überwinden ist, mit fortschreitendem Abziehen ein immer größerer Widerstand der Haftstellen.

Auf diese Weise wird ein Verformen/Krellen des Flächengebildes, etwa mit Papierträger, wirksam vermindert und zudem ist die größere Klebkraft für ein erneutes Verkleben gerade dort, wo sie nötig ist, nämlich am Rand und im Bereich der Ecken, dort, wo bisher das Aufwölben bzw. Ablösen einsetzte.

Weitere vorteilhafte Ausgestaltungen sind in den Ansprüchen näher dargelegt, während für die technischen Einzelheiten, Herstellungsverfahren, verwendeten Materialien etc. ausdrücklich auf die eingangs genannte US-A 4,587,152 Bezug genommen wird, um Wiederholen zu vermeiden.

Besonders bevorzugt sind die erfindungsgemäßen Haftnotizzettel, reversibel verklebbar, mit Papier-Träger, und nur in einem Randbereich erfindungsgemäß mit Kleber ausgerüstet.

Bevorzugt ist aber auch eine Kombination der erfindungsgemäßen, wieder ablösbaren Kleber-Bereiche mit permanent klebenden Bereichen. Waren bisher zwei Verfahrensschritte zur Herstellung eines solchen Produkts nötig, so geschieht dies erfindungsgemäß in einem einzigen Arbeitsgang, wobei im permanent klebenden Bereich soviele Haftstellen angebracht werden wie erforderlich, um die gewünschte Klebkraft zu erzielen, bis zur vollflächigen Beschichtung, die auch in den erfindungsgemäß angewendeten Techniken erzielbar ist.

Wie schon in der in Bezug genommenen US-A 4,587,152 ausgeführt, brauchen die Haftstellen die Kalottenform nicht ideal zu erfüllen. In der Praxis können die Haftstellen vielmehr auch etwa durch schnell laufende, zu beschichtende Bahnen, Siebe etc. oder sonstwie materialmäßig oder herstellungsmäßig bedingt ähnliche Formen annehmen, ohne damit die Erfindung zu verlassen.

Erfindungsgemäß werden bevorzugt Gravurwalzen verwendet, die gezielt in Segmenten spezialbehandelt sind, oder intermittierend gesteuerte Spritzverfahren, oder insbesondere Siebdruckschablonen mit unterschiedlichen Lochanordnungen und Durchmessern auf einer Rund- oder Flachschablone für diskontinuierlichen oder rotativen Betrieb. Speziell in der Siebdrucktechnik können solche Rundschablonen für haftklebende, "controlled-tack gesteuerte" Beschichtungen sehr wirtschaftlich durch galvanische Herstellung, mit Hilfe fotochemischer Verfahren oder spezieller Lasergravuren hergestellt werden. Derartige Siebe sind im Handel erhältlich. Die beschichteten Flächen können alle erdenklichen Gebilde sein. Durch Steuerung der klebenden Segmentbereiche können alle alternierenden klebtechnischen Eigenschaften eingestellt werden, die jede "Controlled-Tack-"Möglichkeit erfüllen. Anwendungstechnisch hat dies gravierende Vorteile insbesondere für folgende Einsätze:
- bedruckte, reversible und wiedereinsetzbare Beschichtungen
- gestanzte, reversible und wiedereinsetzbare Beschichtungen
- spezialgesteuerte, reversible und wiedereinsetzbare Beschichtungen
- unbedruckte und bedruckte unterschiedlich zu vereinzelnder klebtechnischer Eigenschaften
- gefüllte und ungefüllte haftklebrige Flächengebilde und Controlled-Tack-Segmente.

Diese Beschichtungsmöglichkeiten sind für viele Produktvarianten und Substrate wie Papier, Folien, Vliese, Gewebe und Gewirke möglich.

Durch entsprechende Anordnung von Löchern unterschiedlicher Größe und Variierung der klebstoffangereicherten oder verarmten Segmentbereiche können örtlich unterschiedliche klebtechnische Eigenschaften innerhalb einer bedruckten Fläche eingestellt werden, die eine gezielte Steuerung zulassen von:
- Klebkraft
- Tack
- Anfaßvermögen
- Abziehverhalten
- Reversibilität.

Wenn zusätzlich der Masse Zuschlagstoffe zugesetzt werden, können in den klebenden Segmenten zusätzliche Eigenschaften gesteuert werden, wie Farbdifferenzierungen, womit z.B. farbige Nuancen geschaffen werden können, die insbesondere zusammen mit einem transparenten oder opaken Träger verwendet werden können.

Nachfolgend wird die Erfindung anhand von Beispielen erläutert, ohne daß damit eine Beschränkung auf diese Beispiele gemeint ist. Vielmehr kann der Fachmann geeignete Änderungen aufgrund seines Fachwissens vornehmen, ohne damit den Rahmen der Erfindung zu verlassen.

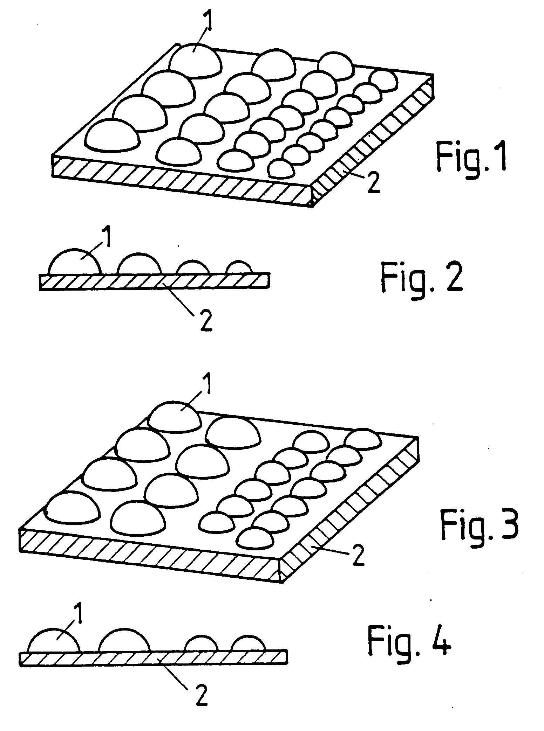

Zudem ist die Erfindung in den anliegenden schematischen Figuren 1 - 4 dargestellt, worin 1 eine kalottenförmige Haftstelle bezeichnet, 2 den Träger. Fig. 1 und 2 zeigen einen kontinuierlichen Anstieg des Klebmasseauftrags. Fig. 3 und 4 einen diskontinuierlichen Anstieg.

### Beispiel 1

In eine 15 l fassende Polymerisationsapparatur, ausgerüstet mit Rührer, Rückflußkühler, Temperaturfühler, Stickstoffeinleitrohr und Dosiervorrichtung werden nach Verdrängen des Luftsauerstoffs durch N₂ 3,00 kg 2-Ethylhexylacrylat, 0,134 kg Acrylsäure, 0,120 kg Butandiolmonoacrylat, 0,100 kg Butandioldiacrylat, 0,020 kg Tetrabrommethan, 0,050 kg anionischer Emulgator (Na-Salz eines äthoxylierten und sulfonierten Nonylphenols) und 5,00 kg entionisiertes Wasser gegeben. Der Inhalt wird unter Rühren auf 76°C erhitzt. Dann werden 10 g Ammoniumperoxodisulfat, gelöst in 50 g H₂O, eindosiert. Nach Einsetzen der Polymerisation wird das Reaktionsgut bei einer Temperatur von 84-86°C gehalten. Nach Abklingen der exothermen Reaktion wird die Temperatur auf 80°C eingestellt.

Nach einer Reaktionszeit von 40 min werden 125 g 25%ige wässrige Ammoniaklösung, 2,5 kg 2-Ethylhexylacrylat und weitere 10 g Ammoniumperoxodisulfat zugesetzt.

Nach einer Gesamtreaktionszeit von 6 Stunden ist die Polymerisation beendet.

Die erhaltene Polymerdispersion hat folgende Daten:

### Feststoffgehalt: 54 %

| Viskosität bei 25°C : | Schubspannung T Pa | Visk. Pa.s |
|---|---|---|
| | 0,22 . 10³ | 0,13 . 10⁵ |
| | 0,25 . 10³ | 0,28 . 10⁴ |
| | 0,40 . 10³ | 0,94 . 10³ |

Oberflächenspannung 55 mN/m 25°C.

Ein haftklebriges Flächengebilde mit definierten Kalotten wird auf folgende Weise hergestellt:
Die Acrylatdispersion wird auf ein auf der Rückseite mit Stearyl-Carbamat (0,7 g/m²) ausgerüstetes Papier, das ein Flächengewicht von 80 g/m² hat, mit einem Siebdruckwerk kontinuierlich aufgetragen. Die verwendete Siebdruckschablone ist ein galvanisch hergestellter Nickelrundkörper, Außendurchmesser 204 mm und Wandstärke ca. 0,1 mm. Durch entsprechende Anordnung von Elementen auf der Walze, auf die die Schablone aufgalvanisiert wird, die das Auftragen von Nickel dort verhindert, entsteht eine Schablone, die mit 44 mm breiten perforierten Streifen versehen ist. Die Perforation geschieht dergestalt, daß die Streifen an den Außenkanten Öffnungen mit einem Durchmesser von etwa 30 . 10⁻³ mm und einen Abstand von ca. 1 mm haben. Zur Mitte des Streifens steigt der Durchmesser der Öffnungen und der Abstand nimmt ab. Im Mittelbereich haben die Öffnungen einen Durchmesser von ca. 90 . 10⁻³ mm und einen Abstand von ca. 0,25 mm.

### Technische Bedingungen: Trägerbahn-Geschwindigkeit 100 m/min

Der Auftrag wird anschließend in einem Trockenkanal üblicher Bauweise soweit getrocknet, daß das Produkt problemlos zur Rolle gewickelt werden kann. Um daraus Haftnotizzettel machen, wird ein Längsschnitt in der Mitte des 44 mm breiten Kleber-Auftrags und ein weiterer Längsschnitt in der Mitte der kleberfreien Zone gelegt, so daß Streifen von 75 mm Breite entstehen, die seitlich einen 22 mm breiten Kleber-Auftrag aufweisen, wobei die Kalottenzahl und damit die Klebkraft zum Rand hin steigt. Aus diesem Streifen werden schließlich Einzel-Zettel von 100 mm Länge geschnitten.

Diese Haftnotizzettel, übereinanderliegend zu Blöcken zusammengefaßt, lassen sich weich und leicht sowohl vom Block, als auch nach dem Ankleben an eine Oberfläche wieder ablösen, ohne Kleber-Rückstand zu hinterlassen und ohne ein Krellen (rundes Aufstellen) des Papiers.

### Beispiel 2

Viele Produkte sollen teilweise nur durch Zerstörung ablösbar sein, andererseits aber doch reversibel kleben.

### Dazu gehören:

Windelverschlüsse
Beutelverschlüsse
und andere Verschlüsse, die wieder zu öffnen sein sollen. In der Regel wird dieses nur durch das Zusammenfügen mehrerer klebender Substrate erreicht.

Erfindungsgemäß ist nur noch ein Substrat erforderlich. Am Beispiel von Windelverschlüssen sollen hier die Produktvorteile erläutert werden:
Der Streifen wird so hergestellt, daß er auf einer Teilfläche (Segment) stark haftet. Die andere Teilfäche ist durch zum Rande hin fallende Klebkraft reversibel mit guten Ablöseeigenschaften eingestellt.

Übliche "wiederschließbare" Windelverschlußstreifen sind nur reversibel, wenn sie auf den zum Produkt gehörenden Zusatzstreifen geklebt werden. Nach einer Korrektur, die ein Versetzen des Klebstreifens erforderlich macht, kann dies nicht mehr reversibel verklebt werden, weil eine Verklebung auf die Windelfolie nur dauerhaft möglich ist.

## Patentansprüche

1. Haftklebrige Flächengebilde, rückstandsfrei wieder ablösbar und erneut verklebbar, mit kalottenförmigen Haftstellen von 20 - 1000 µ Basis-Durchmesser, dadurch gekennzeichnet, daß die Anzahl der Haftstellen ansteigt von mindestens 10 pro cm² auf höchstens 15000 pro cm², und/oder daß der Klebmasse-Auftrag ansteigt von mindestens 1 g/m² auf höchstens 30 g/m² und daß die Haftstellen im Siebdruck, Tiefdruck oder "ink jet" hergestellt sind.

2. Flächengebilde nach Anspruch 1, dadurch gekennzeichnet, daß die Anzahl der Haftstellen und/oder der Klebmasse-Auftrag ansteigt in der Richtung des vorgesehenen Wiederablösens.

3. Flächengebilde nach Anspruch 1, dadurch gekennzeichnet, daß die Anzahl der Haftstellen ansteigt von mindestens 15 cm² auf höchstens 6000 pro cm², insbesondere von mindestens 20 pro cm² auf höchstens 2.500 pro cm², bei einem Basis-Durchmesser der Haftstellen von 80 bis 500 µ, insbesondere 100 - 400 µ.

4. Flächengebilde nach Anspruch 1, dadurch gekennzeichnet, daß mit dem genannten Anstieg die Klebkraft ansteigt von 10 auf 1000, insbesondere von 50 auf 700 cN/100 mm unter 45° von Polyethylen, wobei der Klebmasse-Auftrag von 1 auf 30, insbesondere von 2 auf 15, bevorzugt von 2 auf 6 g/m² ansteigt.

5. Flächengebilde nach Anspruch 1, dadurch gekennzeichnet, daß die Anzahl der Haftstellen und/oder der Klebmasse-Auftrag wieder abfällt, insbesondere auf die Ausgangszahl, wobei Anstieg und Abstieg unabhängig voneinander über eine Strecke von 10 - 50 mm, insbesondere 15 - 25 mm verlaufen.

6. Flächengebilde nach Ansprch 1 oder 5, dadurch gekennzeichnet, daß Anstieg und ggf. Abfall unabhängig voneinander kontinuierlich oder diskontinuierlich bzw. segmentweise erfolgt.

7. Flächengebilde nach Anspruch 1, dadurch gekennzeichnet, daß die Haftstellen aus Klebstoff-Dispersionen mit einem Feststoffgehalt von mindestens 45 Gew.-% vergestellt sind, wobei die verwendeten Dispersionen wässrige Dispersionen, Organosole oder Plastisole sind.

8. Flächengebilde nach Anspruch 7, dadurch gekennzeichnet, daß die Haftstellen im Siebdruck hergestellt sind, unter Verwendung von Sieben von 11 - 305 mesh, insbesondere 60 - 150 mesh, wobei die Siebe als Schablonen auf galvanischem oder photochemischem Weg oder mittels Lasergravur hergestellt sind.

9. Flächengebilde nach Anspruch 1, dadurch gekennzeichnet, daß sich an den Bereich mit ansteigender Anzahl von Haftstellen und/oder Klebmasse-Auftrag ein nicht-reversibel klebender Bereich anschließt, der Klebkräfte von über 1000 cN/100mm aufweist, insbesondere bis zu 5000 cN/100 mm.

10. Flächengebilde nach Anspruch 1, enthaltend als Träger eine Folie, Gewebe, Vlies oder Papier, wobei die dem Kleber entgegengesetzte Seite insbesondere mit einem Release ausgerüstet ist.

11. Flächengebilde nach Anspruch 1 in Form eines Papier-Haftnotizzettels, der seitlich einen 1 - 5 cm, insbesondere 2 - 4 cm breiten Streifen mit zum Zettelrand ansteigender Anzahl Haftstellen und/oder Klebmasse-Auftrag aufweist.

12. Verfahren zur Herstellung eines Flächengebildes nach einem der Ansprüche 1 - 11, dadurch gekennzeichnet, daß der Träger im Siebdruck, Tiefdruck oder mittels "ink jet" mit einer Klebstoff-Dispersion beschichtet wird, die einen Feststoffgehalt von mindestens 45 Gew.-% aufweist, wobei die verwendeten Dispersionen wäßrige Dispersionen, Organosole oder Plastisole sind.

## Claims

1. Self-adhesive sheet-like structure, which can be detached without leaving any residual traces and can be restuck, having hemispherical adhesive spots of 20 - 1000 µ base diameter, characterised in that the number of adhesive spots increases from at least 10 per cm² to at most 15,000 per cm², and/or in that the adhesive compound application increases from at least 1 g/m² to at most 30 g/m², and in that the adhesive spots are produced by screen printing, gravure printing or by means of "ink jet".

2. Sheet-like structure according to Claim 1 characterised in that the number of adhesive spots and/or the adhesive compound application increases in the direction of intended detachment.

3. Sheet-like structure according to Claim 1, characterised in that the number of adhesive spots increases from at least 15 cm² to at most 6,000 per cm², in particular, from at least 20 per cm² to at most 2,500 per cm², with a base diameter of the adhesive spots of 80 to 500 µ, in particular 100 - 400 µ.

4. Sheet-like structure according to Claim 1, characterised in that, with the said increase, the adhesive force increases from 10 to 1000, in particular from 50 to 700 cN/100 mm at 45° from polyethylene, the adhesive compound application increasing from 1 to 30, in particular from 2 to 15, preferably from 2 to 6 g/m².

5. Sheet-like structure according to Claim 1, characterised in that the number of adhesive spots and/or the adhesive compound application decreases again, in particular to the initial number, increase and decrease proceeding independently of each other over a distance of 10 - 50 mm, in particular 15 - 25 mm.

6. Sheet-like structure according to Claim 1 or 5, characterised in that increase and any decrease take place independently of each other continuously or discontinuously or by segments.

7. Sheet-like structure according to Claim 1, characterised in that the adhesive spots are produced from adhesive dispersions having a solids content of at least 45% by weight, the dispersions used being aqueous dispersions, organosols or plastisols.

8. Sheet-like structure according to Claim 7, characterised in that the adhesive spots are produced by screen printing, using screens of 11 - 305 mesh, in particular 60 - 150 mesh, the screens being produced as stencils by a galvanic or photochemical method or by means of laser engraving.

9. Sheet-like structure according to Claim 1, characterised in that the region with an increasing number of adhesive spots and/or adhesive compound application is adjoined by a non-reversibly adhesive region which has adhesive forces of over 1000 cN/100 mm, in particular up to 5,000 cN/100 mm.

10. Sheet-like structure according to Claim 1, containing as base a film, woven fabric, nonwoven fabric or paper, the side away from the adhesive being finished in particular with a release compound.

11. Sheet-like structure according to Claim 1, in the form of a paper self-adhesive note which has at the side a 1 - 5 cm, in particular 2 - 4 cm wide strip with an increasing number of adhesive spots and/or adhesive compound application towards the note border.

12. Process for the production of a sheet-like structure according to one of Claims 1 - 11, characterised in that the base is coated by screen printing, gravure printing or by means of "ink jet" with an adhesive dispersion which has a solids content of at least 45% by weight, the dispersions used being aqueous dispersions, organosols or plastisols.

## Revendications

1. Produits planiformes adhésifs, qui sont à nouveau décollables sans résidus, peuvent à nouveau être collés, et présentent des points d'adhésion en forme de calottes de diamètre de base de 20 à 100 µ, caractérisés en ce que le nombre de points d'adhésion augmente de au moins 10 par cm² à au maximum 15000 par cm², et/ou en ce que la couche de masse adhésive augmente de au moins 1 g/m² à au maximum 30 g/m², et en ce que les points d'adhésion sont produits par sérigraphie, héliogravure rotative ou "ink-jet".

2. Produits planiformes selon la revendication 1, caractérisés en ce que le nombre de points d'adhésion et/ou la couche de masse adhésive augmente dans la direction du redécollement prévu.

3. Produits planiformes selon la revendication 1, caractérisés en ce que le nombre des points d'adhésion augmente de au moins 15 par cm² à au maximum 6000 par cm², en particulier d'au moins 20 par cm² à au maximum 2500 par cm², les points d'adhésion ayant un diamètre de base compris entre 80 et 500 µ, particulièrement entre 100 et 400 µ.

4. Produits planiformes selon la revendication 1, caractérisés en ce que, en parallèle avec ladite augmentation, la force d'adhésion augmente de 10 à 1000, particulièrement de 50 à 700 cN/100 mm sous 45° de polyéthylène, la couche de masse adhésive augmentant de 1 à 30, particulièrement de 2 à 15, préférablement de 2 à 6 g/m².

5. Produits planiformes selon la revendication 1, caractérisés en ce que le nombre de points d'adhésion et/ou la couche de masse adhésive diminue à nouveau, particulièrement à la valeur initiale, l'augmentation et la diminution ayant lieu indépendamment l'une de l'autre sur une distance de 10-50 mm, particulièrement de 15-25 mm.

6. Produits planiformes selon la revendication 1 ou 5, caractérisés en ce que l'augmentation et éventuellement la chute se produisent indépendamment l'une de l'autre, en continu ou en discontinu ou par segments.

7. Produits planiformes selon la revendication 1, caractérisés en ce que les produits d'adhésion sont produits à partir de dispersions d'adhésif ayant une teneur de matières solides de au moins 45 % en poids, les dispersions utilisées étant des dispersions aqueuses, des sols organiques ou des plastisols.

8. Produits planiformes selon la revendication 7, caractérisés en ce que les points d'adhésion sont produits par sérigraghie, à l'aide de toiles de 11-305 mesh, particulièrement de 60-150 mesh, les toiles étant produites en tant que pochoirs par voie galvanique ou photochimique ou par gravure laser.

9. Produits planiformes selon la revendication 1, caractérisés en ce qu'au domaine ayant un nombre croissant de points d'adhésion et/ou de couche de masse adhésive se raccorde un domaine adhésif irréversible, qui présente des forces d'adhésion de plus de 1000 cN/100 mm, allant particulièrement jusqu'à 5000 cN/100 mm.

10. Produits planiformes selon la revendication 1, comprenant en tant que support une feuille, un tissu, un matelas de fibres ou du papier, le côté opposé à l'adhésif étant muni particulièrement d'un élément anti-adhésif.

11. Produits planiformes selon la revendication 1 en forme d'un feuillet adhésif en papier, qui présentent latéralement une bande de 1 à 5 cm de large, particulièrement de 2 à 4 cm de large, ayant un nombre de points d'adhésion et/ou de couche de masse adhésive qui va en croissant en direction du bord du feuillet.

12. Méthode de fabrication d'un produit planiforme selon l'une quelconque des revendications 1 à 11, caractérisée en ce que le support est revêtu, par sérigraphie, héliogravure rotative ou par "ink-jet", d'une dispersion d'adhésif, qui présente une teneur de matières solides de au moins 45 % en poids, les dispersions utilisées étant des dispersions aqueuses, des sols organiques ou des plastisols.
